# EUROPEAN PATENT APPLICATION

(11) **EP 1 696 372 A1**
(43) Date of publication of application: **30.08.2006**
(21) Application number: 03780916.7
(22) Date of filing: 19.12.2003
(51) Int. Cl.: G06Q 10/00

(54) **PRESENCE INFORMATION PROCESSING METHOD, PROGRAM, TERMINAL APPARATUS, COMPUTER, AND PRESENCE INFORMATION MANAGING SERVER**

(71) Applicant: FUJITSU LIMITED, Kawasaki-shi, Kanagawa 211-8588 (JP)
(72) Inventor: MORISHIMA, Hisayuki, Fujitsu Limited, Kawasaki-shi, Kanagawa 211-8588 (JP); YAMAMOTO, Yuuki, Fujitsu Limited, Kawasaki-shi, Kanagawa 211-8588 (JP); KAKUTA, Jun, Fujitsu Limited, Kawasaki-shi, Kanagawa 211-8588 (JP); OHNO, Takashi, Fujitsu Limited, Kawasaki-shi, Kanagawa 211-8588 (JP)
(74) Representative: Sunderland, James Harry
(86) International application number: PCT/JP2003/016289
(87) International publication number: WO 2005/062217

(57) **Abstract**

The presence information delivery system according to this invention manages, for each user, data of one or plural presence group so as to associate one or plural presence information items for the presence information to be delivered with an ID or IDs of one or plural delivery destination user of the presence information relating to the presence information item. With this configuration, by generating a new presence group associating the presence information item with the delivery destination user, by registering the presence information item to another presence group, and by registering the delivery destination user into another presence group, the flexible information delivery is enabled according to characteristics or the like of the delivery destination user and presence information.

## Description

### [Technical Field]

This invention relates to a presence information delivery technique for delivering information such as a state change of a user (various information including user attribute information, and hereinafter, it is called presence information) to other preregistered and allowed users in real time.

### [Background Technology]

The information delivery in the Internet is carried out mainly by using Web servers and e-mails. The user finds out a Web server, which delivers the desired information, by using a search engine or the like, and accesses the Web server to obtain the desired information. On the other hand, as for the e-mails, the delivery of the e-mails is carried out by registering the e-mail address to mailing lists or mail delivery services to obtain information. However, these do not report the update of the information in real time, and the operation such as the spontaneous access by the user or the receipt of the e-mails is required. In addition, in a case of the e-mail, the desired information at that time is not always included.

Thereupon, a presence information delivery system comes to be utilized in recent years. In this presence information delivery system, it is necessary that a user who desires the delivery of the information carries out a subscription registration in advance. Then, when the update of the information for which the user carries out the subscription registration is carried out and the user has logged in the presence information delivery system (that is, while the delivery of the information is allowed), the delivery of the updated portion of the information can be carried out. This presence information system is also called a buddy list system, and is implemented as one function in an instant message service, for example. In the instant message service, when users to be observed are registered in advance, the state change of the users to be observed is notified during the login.

In this way, in a viewpoint of receiving the delivery of the desired information in real time, the convenience degree of the presence information delivery system is high. However, the conventional presence information delivery system was not always convenient for the information delivery side. That is, because he or she can carry out only selection of whether all the possessed information is shown or not, it is impossible to deliver information according to the subscriber. Because all the information is shown, there is a possibility that the leakage of the information occurs according to circumstances. Therefore, in order to deliver the information according to the subscriber, it is necessary to adopt a method in which plural user IDs are held to change the delivery contents according to the user ID, or a method in which plural presence information delivery systems or plural presence information delivery servers are used according to the delivery contents. However, even in such methods, because a specific subscriber is associated with a specific user ID or the presence information delivery system or presence information delivery server, it is very difficult to dynamically change the delivery contents as if the specific subscriber is associated with another specific user ID or the like.

In addition, although there is a system in which publication control information is defined to deliver the information according to the subscriber, when the publication control information has to be changed, it is necessary to carry out the subscription registration again after the prior subscription registration of the subscriber is discarded. This causes inconvenience of the subscribers. In addition, it is necessary to manage the publication control information in addition to a subscriber list. Therefore, the user management resource is additionally required. This causes a problem in which the necessary user management resource becomes huge when the number of subscribers increases. Moreover, it becomes impossible to respectively set the publication control information for each subscriber in actual.

Incidentally, as for the presence information delivery system, JP-A-2003-296525 discloses a following technique. First, a buddy A designates a buddy B as a transfer destination. Then, when the presence of the buddy B is updated, a presence manager of the buddy A judges whether or not the presence information of the buddy A should be changed. It is judged, first, whether or not the buddy B is a transfer destination of the buddy A, and based on a change rule or the like, whether or not the latest presence information of the buddy A can be changed to the presence information of the buddy B. If it is possible to change, the presence information of the buddy A is rewritten to the presence information of the buddy B, and it is delivered to the presence manager of other buddies. In addition, the latest presence information of the buddy B is notified to the buddy A. In this way, it becomes possible to use the presence information of another buddy as his or her own presence information. However, as for the publication control, a special mechanism is not incorporated.

### Patent Reference 1: JP-A-2003-296525

As described above, in the conventional arts, the flexible information delivery is difficult. In addition, suppose the flexible information delivery is made possible, there is a problem that the extra resource such a memory capacity is required. Furthermore, it is a problem from a viewpoint of the convenience that the delivery source user respectively sets the publication control information for each subscriber by himself or herself.

### [Summary of the Invention]

An object of this invention is to provide a presence information processing technique enabling the flexible information delivery and easy delivery settings.

An object of this invention is to provide a presence information processing technique enabling the flexible information delivery and enabling to automatically carry out appropriate delivery settings.

A presence information processing method according to a first aspect of this invention is executed by a terminal apparatus cooperating with a presence information management server, which manages, for each user, data concerning one or a plurality of presence groups to associate one or a plurality of presence information items for presence information to be delivered with one or a plurality of IDs of delivery destination users of the presence information relating to the presence information item. The presence information processing method executed by this terminal apparatus includes: a first data receiving step of, when a specific user (e.g. a shop user or information distribution/delivery service providing user) requested the delivery of the presence information, receiving first data including the presence information item regarding specific presence information, which is registered in the presence information management server in advance and will be delivered to a specific user, from the presence information management server; a step of carrying out a display on a display device to prompt an input regarding whether or not the delivery of the specific presence information to the specific user is approved, based on the first data received in the first data receiving step; and a step of, in response to an approval input for the delivery of the specific presence information to the specific user, generating a creation request of a presence group to associate the specific user with the presence information item regarding the specific presence information, based on the first data, and transmitting the creation request to the presence information management server.

By carrying out the aforementioned management of the presence group, and changing the presence group to which the delivery destination user belongs or the presence group to which the presence information item belongs, the flexible information delivery becomes possible. In addition, because the presence information to be delivered to the specific user can be confirmed based on the first data received from the presence information management server, and the presence group is automatically generated in the presence information management server based on the first data in response to the approval input, the delivery settings become simple and easy.

In addition, the first aspect of this invention may further include: a step of transmitting a delivery request for the presence information of the specific user to the delivery information management server; and a second data receiving step of receiving second data representing that the specific user requested to deliver the presence information, from the presence information management server, and the first data receiving step may be carried out after the second data receiving step. For example, this corresponds to a case where a user B of the requesting source also has to deliver information designated by a user A to the user A in order to receive the delivery of the information of the user A.

In addition, the first aspect of this invention may further include: a step of transmitting a request to cancel a subscription relation with the specific user to the presence information management server in response to a refusal input for the delivery of the specific presence information to the specific user. According to the aforementioned example, when the user B does not allow the delivery of the information designated by the user A to the user A, a subscription application of the user B to the user A or the like is withdrawn.

Furthermore, the aforementioned first data may include information concerning the presence group to associate the specific user with the presence information item regarding the specific presence information.

In addition, the first aspect of this invention may further include: a step of receiving the changed second data from the presence information management server when the first data is changed by the specific user; a step of carrying out a display to prompt an input regarding whether or not the delivery of the specific presence information to the specific user is approved, based on the received and changed second data; and a step of generating a change request of the presence group to associate the specific user with the presence information item regarding specific presence information after change, based on the changed second data, in response to an approval input for the delivery of the specific presence information, and transmitting the generated change request to the presence information management server.

In the conventional art, when the publication control information was changed, the subscription relation was discarded. Therefore, the subscription procedure had to be carried out again. If it is possible to obtain the approval again by carrying out the aforementioned steps, the delivery of the information continues by the update of the presence group without discarding the subscription relation.

Furthermore, at least one portion of the first data may be the presence information of the specific user, and the presence information corresponding to at least one portion of the first data may be associated with at least one portion of the presence groups of the specific user, and the first aspect of this invention may further include: a step of receiving at least one portion of the second data as the presence information from the presence information management server. If at least one portion of the first data used for the publication control is also registered as the presence information, the delivery to the subscribers is carried out at the time the first data is changed, similarly to the normal delivery at the time the presence information is updated.

A presence information processing method according to a second aspect of this invention is executed by a computer cooperating with a presence information management server that manages, for each user, data concerning one or a plurality of presence groups to associate one or a plurality of presence information items for presence information to be delivered with IDs of one or a plurality of delivery destination users of the presence information relating to the presence information item. Then, this presence information processing method includes a step of obtaining predetermined data and storing the predetermined data into a storage device; an evaluation step of evaluating the predetermined data stored in the storage device based on data, which is associated with change of an association in the presence group between the presence information item and the delivery destination user and is stored in a group change data storage; and a step of, when the predetermined data stored in the storage device is evaluated in the evaluation step as satisfying a predetermined condition, generating a request for at least either change of the presence group to which the presence information item belongs or change of the presence group to which the delivery destination user belongs, and transmitting the generated request to the presence information management server.

By carrying out the aforementioned management of the presence group, and changing the presence group to which the delivery destination user belongs or the presence group to which the presence information item belongs, the flexible information delivery becomes possible. In addition, by carrying out the aforementioned processing in a computer in, for example, a shop, an information distribution service provider or the like, an appropriate control of the information delivery comes to be automatically carried out based on outside data such as a state of the subscriber, or a characteristic of the delivered information.

Incidentally, when the predetermined data described above is data associated with the delivery destination user, at least the request for the change of the presence group to which the delivery destination user belongs may be generated. For example, in a case where position data as the presence information of the subscriber is received, when changing the subscriber's group to the presence group according to the position data, the information delivery is carried out along with the state of the subscriber.

On the other hand, when the predetermined data is data that is associated with the presence information item in advance and is stored in the group change data storage device at least, the request for the change of the presence group to which the presence information item belongs may be generated. For example, when the present time is an opening time of a shop, which was registered in advance, it becomes possible to deliver new information to appropriate subscribers by registering the presence information of the shop to a presence group associated with the subscribers who exist in a location area of the shop, for example. That is, by shifting the presence group to which the presence information item belongs, the flexible information delivery becomes possible.

Furthermore, the second aspect of this invention may further include: a step of, when it is notified that another user is newly associated with the presence group, requesting another user to deliver data relating to the predetermined presence information item.

A presence information processing method according to a third aspect of this invention is executed by a presence information management server storing, for each user, data concerning one or a plurality of presence group to associate one or a plurality of presence information items for the presence information to be delivered with IDs of one or a plurality of delivery destination users of the presence information relating to the presence information item in a presence data storage. Then, this presence information processing method includes: a step of, when a new delivery request of the presence information of the second user is received from a terminal of the first user, reading out service profile data, which includes the presence information item regarding specific presence information delivered to the first user, and is stored in association with the first user, from a service profile data storage, and transmitting the read service profile data to a terminal of the second user; and a step of, when a generation request of the presence group of the second user to associate the first user as a delivery destination user with the presence information item regarding the specific presence information, is received from the terminal of the second user, generating the presence group according to the generation request, and registering the generated presence group into the presence data storage.

By carrying out the aforementioned management of the presence group, and changing the presence group to which the delivery destination user belongs or the presence group to which the presence information item belongs, the flexible information delivery can be carried out. In addition, the memory efficiency in the presence information management server is improved. Furthermore, by carrying out the aforementioned processing, it becomes simple and easy for the second user to carry out delivery settings of his or her own presence information for the first user.

Incidentally, the third aspect of this invention may further include: a step of, when the service profile data after change is received from the terminal of the first user, registering the service profile data after the change in the service profile data storage; a step of reading out the service profile data after the change, which is registered in association with the first user, from the service profile data storage, and transmitting the read service profile data to a terminal of a third user associated with one of the presence groups of the first user; and a step of, when a change request of the presence group of the third user to associate the first user as the delivery destination user with a specific presence information item after the change, is received from the terminal of the third user, changing content of the presence group according to the change request, and registering the changed content of the presence group into the presence data storage device.

By doing so, when the first user changed the service profile, it becomes possible to continuously deliver the information to the subscriber who approves the change, without uniformly discarding the subscription relation.

It is possible to create a program for causing a computer to execute the methods of this invention, and this program is stored into a storage medium or a storage device such as a flexible disk, a CD-ROM, a magneto-optical disk, a semiconductor memory, or a hard disk. In addition, the program may be distributed as digital signals over a network in some cases. Incidentally, intermediate processing results are temporarily stored in the storage device such as a memory.

### [Brief description of the drawings]

FIG. 1 is a system outline diagram relating to one embodiment of this invention;
FIG. 2 is a diagram showing one example of presence data for an information distribution service provider;
FIG. 3 is a diagram showing one example of presence data for a shop;
FIG. 4 is a diagram showing one example of presence data for a normal user:
FIG. 5 is a functional block diagram of a computer apparatus;
FIG. 6 is a diagram showing a processing flow in a case where a user transmitted a delivery request to the information distribution service provider;
FIG. 7 is a diagram showing a processing flow in the case where the user transmitted the delivery request to the information distribution service provider;
FIG. 8 is a diagram showing one example of a service profile;
FIG. 9 is a diagram showing a processing flow in the case where the user transmitted the delivery request to the information distribution service provider;
FIG. 10 is a diagram showing a processing flow in the case where the user transmitted the delivery request to the information distribution service provider;
FIG. 11 is a diagram showing a processing flow of a delivery processor;
FIG. 12 is a diagram showing a processing in a case where the service profile was changed;
FIG. 13 is a diagram showing a processing in a case where the presence group to which the user belongs is changed based on position data;
FIG. 14 is a diagram showing a processing in a case where the presence group to which the presence information belongs is changed according to time; and
FIG. 15 is a diagram showing one example of a processing when a subscription application to the shop is carried out.

### [Best mode for carrying out the invention]

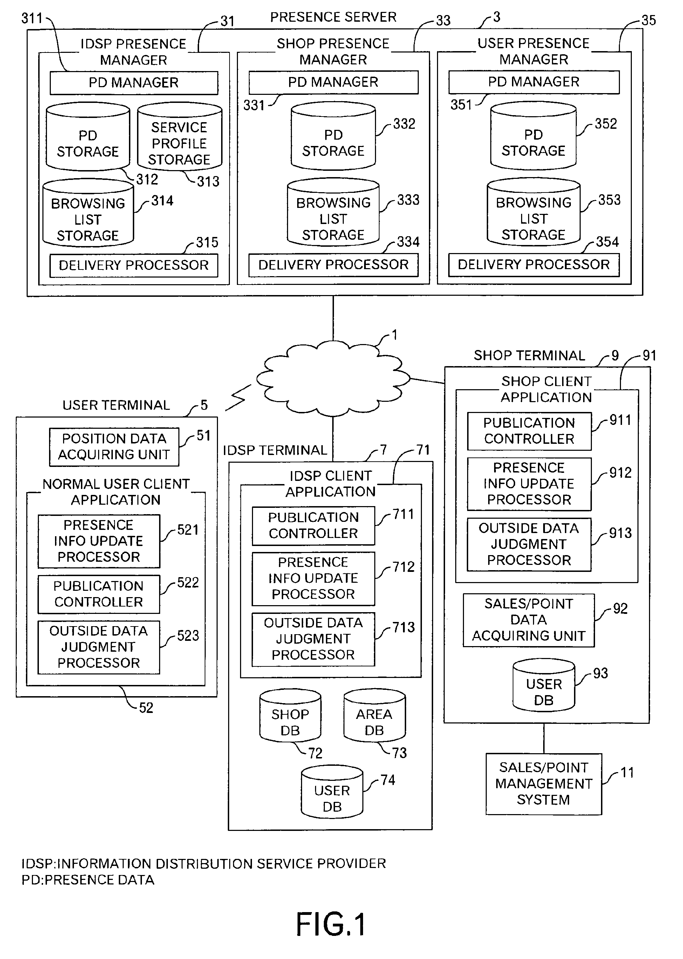

FIG. 1 shows a system outline diagram relating to one embodiment of this invention. For example, a computer network 1 such as the Internet is connected via wire or wireless with a presence server 3, one or plural user terminals 5 operated by normal users, one or plural IDSP terminal 7 operated by information distribution service providers (IDSP), which provides a service to deliver information of plural shops, for example, and one or plural shop terminals 9 in shops, which sell goods and/or provide services. For example, the user terminal 5 is a mobile terminal such as a notebook-type personal computer (PC), a cellular phone, and personal digital assistance (PDA), and it is not always the mobile terminal, but it may be a desktop-type PC. In addition, the IDSP terminal 7 and the shop terminal 9 are PCs, for example, and they are not always the mobile terminals.

The presence server 3 includes a presence manager to manage, for each user, the presence information of the user. That is, it includes one or plural IDSP presence managers 31 for one or plural IDSPs, one or plural shop presence managers 33 for one or plural shops, and one or plural user presence managers 35 for one or plural user (here, normal user). The IDSP presence manager 31 includes a presence data manager 311, a presence data storage 312, a service profile storage 313, a browsing list storage 314 storing a list of IDs of users who currently deliver to the IDSP, and a delivery processor 315. The shop presence manager 33 includes a presence data manager 331, a presence data storage 332, a browsing list storage 333 storing a list of IDs of users who currently deliver to the shop, and a delivery processor 334. Incidentally, the shop presence manager may include a service profile storage. The user presence manager 35 includes a presence data manager 351, a presence data storage 352, a browsing list storage 353 storing a list of IDs of subscription source users who currently deliver to the user, and a delivery processor 354.

The user terminal 5 includes a position data acquiring unit 51 to acquire current position data from, for example, the global positioning systems (GPS), and a normal user client application 52. The position information data acquiring unit 51 is not mandatory, but when it has the position information data acquiring unit 51, it becomes possible to receive an additional service. The normal user client application 52 carries out the subscription of the presence information of other users by cooperating with the corresponding user presence manager 35 in the presence server 3, and carries out the delivery settings of the presence information for other users. This normal user client application 52 includes a presence information update processor 521, a publication controller 522 and an outside data judgment processor 523.

The IDSP terminal 7 includes an IDSP client application 71, a shop DB 72, an area DB 73, and a user DB 74. Various data for shops from which the information delivery is contracted is registered in the shop DB 72. For example, the data includes a shop code, a shop name, an address, position data such as latitude and longitude or an area code defined in the area DB 73, a mail address, a telephone number, a facsimile number, an opening time, a closing time, closed date (or working date) and the like. In addition, the area DB 73 stores area definition based on position data such as address or the latitude and longitude, and registers an area code for each area. However, the management of the area DB 73 is not mandatory, but is necessary in order to provide an additional service. The user DB 74 stores, for each user ID, the presence information (hobby, telephone number, position data and the like) delivered, for example. The IDSP client application 71 includes a publication controller 711, a presence information update processor 712, and an outside data judgment processor 713.

The shop terminal 9 holds a shop client application 91, a sales/point data acquiring unit 92, and a user DB 93. In addition, the shop terminal 9 is connected via a local area network (LAN), for example, to sales/point data management system 11. The shop client application 91 includes a publication controller 911, a presence information update processor 912, and an outside data judgment processor 913. The user DB 93 stores, for each user ID, presence information (hobby, telephone number, position data and the like) delivered, for example.

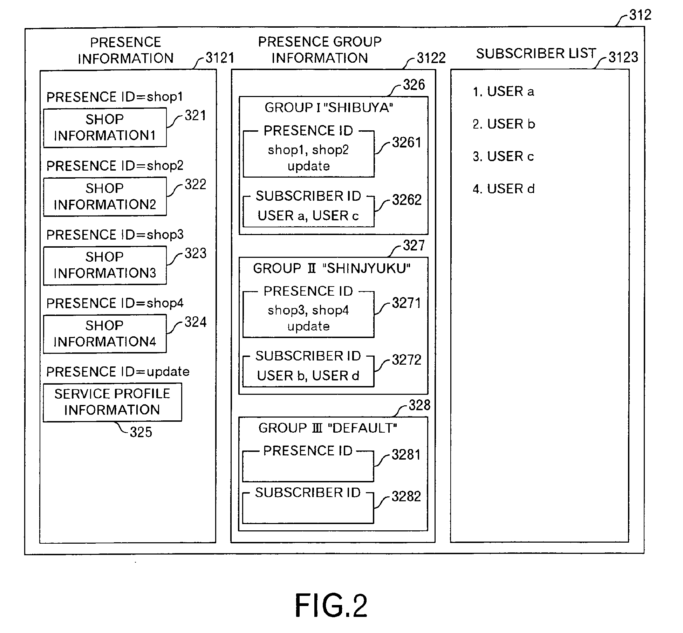

FIG. 2 shows an example of data stored in the presence data storage 312 included in the IDSP presence manager 31 of the presence server 3. In the example of FIG. 2, the presence data storage 312 includes a presence information storage area 3121, a presence group information storage area 3122, and a subscriber list storage area 3123. Conventionally, only the presence data storage area 3121 and the subscriber list storage area 3123 are provided, and the presence group information storage area 3122 is provided this time. The presence information storage area 3121 is an area to store, for each presence information item, the presence information (here, shop information), and includes an area 321 to store the presence information (here, shop information 1) whose presence ID (hereinafter, also called an ID of the presence information), which is an ID of the presence information item, is "shop1", an area 322 to store the presence information (here, shop information 2) whose presence ID is "shop2", an area 323 to store the presence information (here, shop information 3) whose presence ID is "shop3", an area 324 to store the presence information (here, shop information 4) whose presence ID is "shop4", and an area 325 to store the presence information (here, service profile information) whose presence ID is "update". However, the number of areas in the presence information 3121 is not limited to "5", and an arbitrary number of areas can be defined. The association relation between the presence ID and the presence information item name has to be unified in the system.

The presence group information storage area 3122 is an area to store data to associate the presence information item with the delivery destination user ID (i.e. subscriber ID). Here, it includes an area 326 including an area 3261 to store presence IDs that belongs to a group I "Shibuya", which is a presence group, and an area 3262 to store user IDs (i.e. subscriber IDs), an area 327 including an area 3271 to store presence IDs that belongs to a group II "Shinjyuku", and an area 3272 to store subscriber IDs, and an area 328 including an area 3281 to store presence IDs that belongs to a group III "default", and an area 3282 to store subscriber IDs. The group name "Shibuya" or "Shinjyuku" is to identify an area of shops from which the information delivery is contracted. The default group is a group to which the subscriber is initially registered. The number of groups is not limited to "3", and an arbitrary number of groups can be defined.

Here, the user IDs (subscriber IDs) of the users for whom the information delivery is approved such as the user a, user b, user c, and user d are registered in the subscriber list storage area 3123. The number of subscribers is not limited to "4", and an arbitrary number of subscribers can be registered.

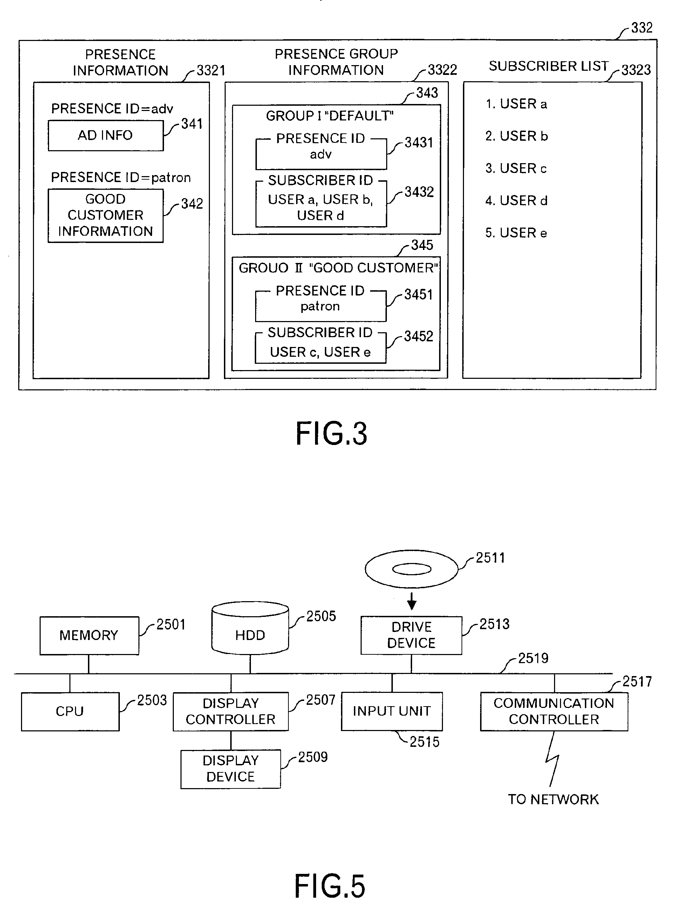

FIG. 3 shows an example of data stored in the presence data storage 332 included in the shop presence manager 33 of the presence server 3. In the example of FIG. 3, the presence data storage 332 includes a presence information storage area 3321, a presence group information storage area 3322, and a subscriber list storage area 3323. The presence information storage area 3321 includes an area 341 to store the presence information (here, advertisement information) whose presence ID, which is an ID of the presence information item, is "adv", and area 342 to store the presence information (here, advertisement information for good customers) whose presence ID is "patron". However, the number of areas in the presence information 3321 is not limited to "2", and an arbitrary number of areas can be defined.

The presence group information storage area 3322 includes an area 343 including an area 3431 to store presence IDs belonging to a group I "default", which is a presence group, and an area 3432 to store user IDs (i.e. subscriber IDs), and an area 345 including an area 3451 to store presence IDs belonging to a group II "good customers", and an area 3452 to store the subscriber IDs. The group name "default" or "good customers" is to identify a category of the information delivery destination users. The default group is a group to which the subscriber is initially registered. The number of groups is not limited to "2", and an arbitrary number of groups can be defined.

Here, the user IDs (subscriber IDs) of the users for whom the information delivery is approval such as the user a, user b, user c, user d, and user e is registered in the subscriber list storage area 3323.

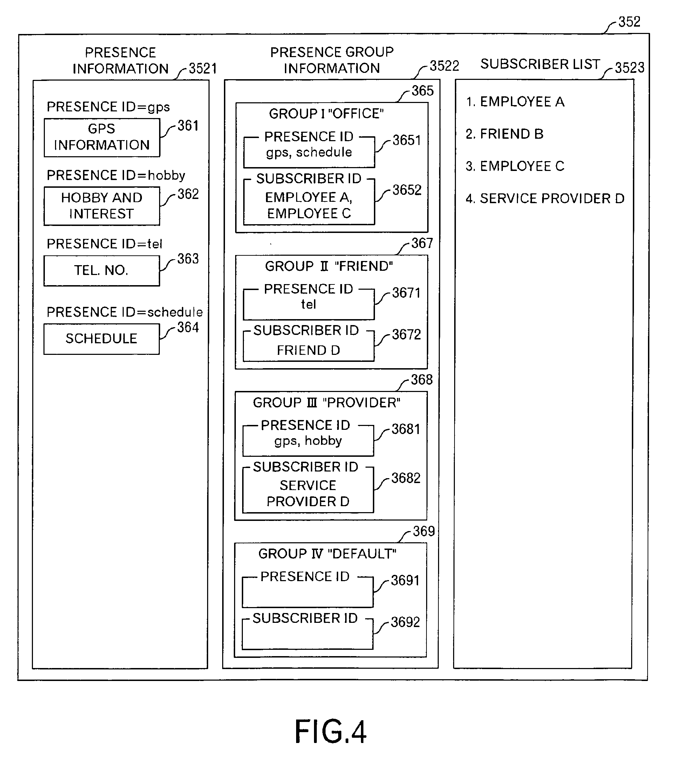

FIG. 4 shows an example of data stored in the presence data storage 352 included in the user presence manager 35 of the presence server 3. In the example of FIG. 4, the presence data storage 352 includes a presence information storage area 3521, a presence group information storage area 3522 and a subscriber list storage area 3523. The presence information storage area 3521 includes an area 361 to store the presence information (here, position data by GPS) whose presence ID, which is an ID of the presence information item, is "gps", an area 362 to store the presence information (here, hobby and interest information) whose presence ID is "hobby", an area 363 to store the presence information (here, telephone number) whose presence ID is "tel", and an area 354 to store the presence information (here, schedule) whose presence ID is "schedule". However, the number of areas in the presence information 3521 is not limited to "4", and an arbitrary number of areas can be defined.

The presence group information storage area 3522 includes an area 365 including an area 3651 to store presence IDs belonging to a group I "office", which is a presence group, and an area 3652 to store user IDs (i.e. subscriber IDs), an area 368 including an area 3671 to store presence IDs belonging to a group II "friend" and an area 3672 to store subscriber IDs, an area 368 including an area 3681 to store presence IDs belonging to a group III "Provider D", and an area 3682 to store subscriber IDs, and an area 369 including an area 3691 to store presence IDs belonging to a group IV "default", and an area 3692 to store subscriber IDs. The group name "office", "friend" "provider D" or "default" is to identify a category of the information delivery destination user. The default group is a group to which the subscriber is initially registered. The number of group is not limited to "4", and an arbitrary number of groups can be defined.

The user IDs (subscriber IDs) of the users for whom the information delivery is approved such as employee A, friend B, employee C and service provider D are registered in the subscriber list storage area 3523.

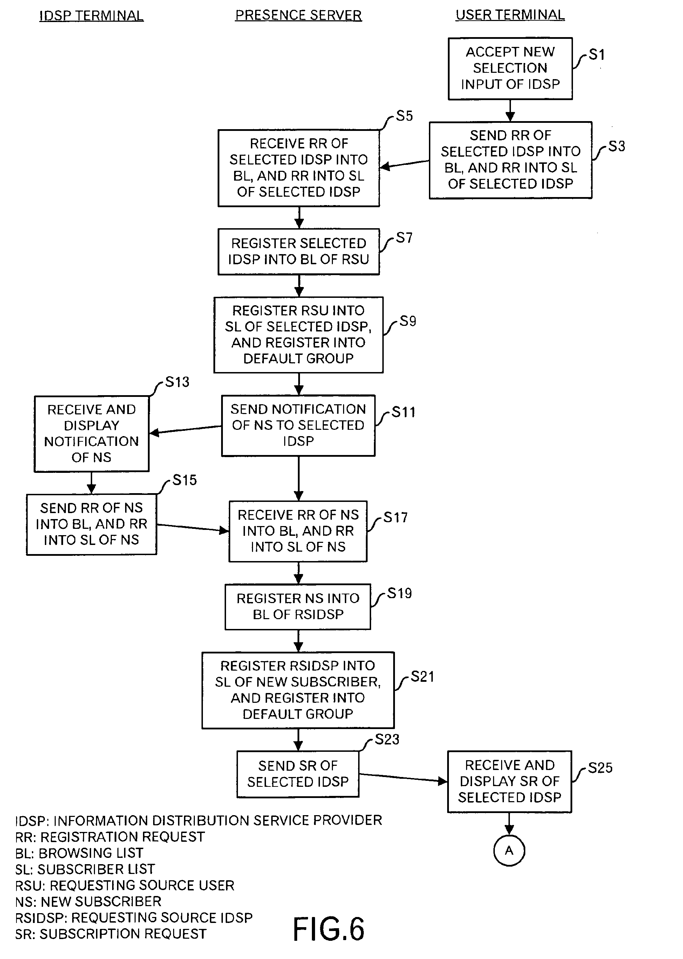

Incidentally, the presence server 3, the user terminal 5, the IDSP terminal 7, the shop terminal 9 and the like shown in FIG. 1 are computer devices as shown in Fig. 5. That is, a memory 2501 (storage device), a CPU 2503 (processor), a hard disk drive (HDD) 2505, a display controller 2507 connected to a display device 2509, a drive device 2513 for a removal disk 2511, an input device 2515, and a communication controller 2517 for connection with a network are connected through a bus 2519 as shown in Fig. 28. An operating system (OS) and an application program for carrying out the foregoing processing in the embodiment, are stored in the HDD 2505, and when executed by the CPU 2503, they are read out from the HDD 2505 to the memory 2501. As the need arises, the CPU 2503 controls the display controller 2507, the communication controller 2517, and the drive device 2513, and causes them to perform necessary operations. Besides, intermediate processing data is stored in the memory 2501, and if necessary, it is stored in the HDD 2505. In this embodiment of this invention, the application program to realize the aforementioned functions is stored in the removal disk 2511 and distributed, and then it is installed into the HDD 2505 from the drive device 2513. It may be installed into the HDD 2505 via the network such as the Internet and the communication controller 2517. In the computer as stated above, the hardware such as the CPU 2503 and the memory 2501, the OS and the necessary application program are systematically cooperated with each other, so that various functions as described below in details are realized.

Next, a processing flow of the system shown in FIG. 1 will be explained by using FIGs. 6 to 15. First, a processing flow in a case where a normal user (here, user A) starts the subscription of the presence information of the IDSP will be explained by using FIGs. 6 to 10. Incidentally, it is assumed that, before this processing is carried out, the registration and login to the presence server 3 have already been completed. First, the normal user client application 52 of the user terminal 5 accepts a selection input relating to a new subscription application to another user (here, IDSP) from the user A (step S1). Next, the publication controller 522 of the normal user client application 52 generates a registration request to request that the IDSP selected as a new subscription destination is registered in a browsing list of the user A, and a registration request to request that the user A is registered in a subscriber list of the selected IDSP, and transmits them to the presence server 3 (step S3).

In response to this, the presence data manager 351 of the user presence manager 35 corresponding to the user A and included in the presence server 3 receives the registration request to request that the IDSP selected as the new subscription destination is registered into the browsing list of the user A, the presence data manager 311 of the IDSP presence manager 31 corresponding to the selected IDSP receives the registration request to request that the user A is registered into the subscriber list of the selected IDSP, and they respectively store the registration requests into a storage device such as a main memory, temporarily (step S5). Here, although the explanation will be carried out on the assumption that the presence data manager 351 of the user presence manager 35 and the presence data manager 311 of the IDSP presence manager 31 individually receive the aforementioned registration requests, it is possible that the presence data manager 351 of the user presence manager 35 temporarily receives the registration request to request that the user A is registered into the subscriber list of the selected IDSP, and transfers it to the presence data manager 311 of the IDSP presence manager 31.

Then, in response to the aforementioned registration request, the presence data manager 351 of the user presence manager 35 registers the selected IDSP into the browsing list of the requesting source user, which is stored in the browsing list storage 353 (step S7). The browsing list is used when displaying the presence information by the client application, for example. In addition, in response to the aforementioned registration request, the presence data manager 311 of the IDSP presence manager 31 registers the user A (i.e. the user ID of the user A) that is a requesting source into the subscriber list stored in the presence data storage 312, and further registers the user A into the presence group "default" (step S9). The registration at the steps S7 and S9 is still a provisional registration at this stage. Then, because the registration into the subscriber list was newly carried out, the presence data manager 311 transmits a message to notify the appearance of a new subscriber (i.e. user A) to the IDSP terminal 7 of the selected IDSP (step S11). This notification corresponds to a subscription request from the user A to the selected IDSP.

The publication controller 711 of the IDSP client application 71 in the IDSP terminal 7 receives the notification regarding the new subscriber (i.e. user A) from the presence server 3, and displays it on a display device (step S13). Incidentally, when the following processing is automatically carried out, there is no need to especially display it on the display device. However, when there is a case where a manager of the IDSP confirms, the IDSP terminal displays it on the display device. Then, in response to an instruction from the manager of the IDSP or automatically, the publication controller 711 generates a registration request to request that the new subscriber (here, user A) is registered into the browsing list of this IDSP, and a registration request to request that this IDSP is registered into the subscriber list of the new subscriber (user A), and transmits them to the presence server 3 (step S15).

In response to this, the presence data manager 311 of the IDSP presence manager 31 in the presence server 3 receives the registration request to request that the user A is registered into the browsing list of the IDSP, the presence data manager 351 of the user presence manager 35 receives the registration request to request that the IDSP is registered into the subscriber list of the user A, and they temporarily stores the registration requests into a storage device such as a main memory (step S17). As described in the step S5, it is possible that the presence data manager 311 of the IDSP presence manager 31 temporarily receives both of the registrations, and transfers the registration request to request that the IDSP is registered into the subscriber list of the user A to the presence data manager 351 in the user presence manager 35 of the user A.

Anyway, the presence data manager 311 of the IDSP presence manager 31 registers the user A into the browsing list stored in the browsing list storage 314 of the IDSP according to the aforementioned registration request (step S19). In addition, the presence data manager 351 of the user presence manager 35 registers the IDSP (i.e. the user ID of the IDSP) that is a requesting source user into the subscriber list stored in the presence data storage 352 according to the aforementioned registration request, and further registers the IDSP to the presence group "default" (step S21). Incidentally, the registration at the steps S19 and S21 is still a provisional registration at this stage. Then, because the new registration into the subscriber list was carried out, the presence data manager 351 transmits a message to notify the appearance of the new subscriber (i.e. IDSP) to the user terminal 5 of the user A (step S23). This notification corresponds to the subscription request from the selected IDSP to the user A.

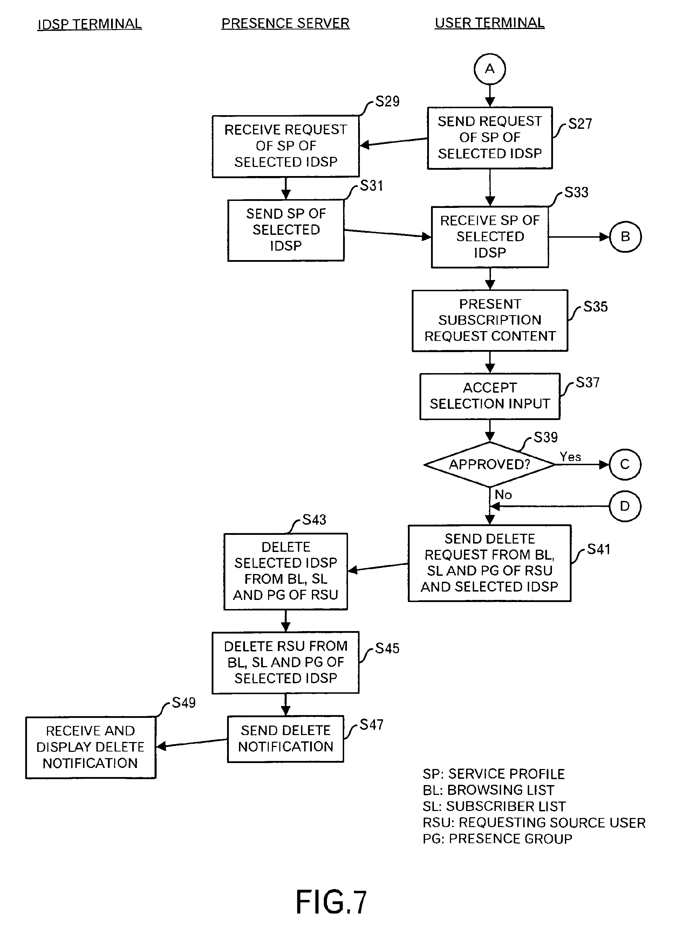

The publication controller 522 of the normal user client application 52 in the user terminal 5 receives the message to notify the appearance of the new subscriber (i.e. IDSP) from the presence server 3, and displays it on the display device (step S25). The processing hereinafter shifts to a processing of FIG. 7 via a terminal A.

Next, the publication controller 522 in the normal user client application 52 of the user terminal 5 transmits a request for the service profile of the selected IDSP in response to an instruction from the user or automatically to the presence server 3 (FIG. 7: step S27). The presence data manager 311 included in the IDSP presence manager 31 of the selected IDSP in the presence server 3 receives the request for the service profile, and temporarily stores it into the storage device such as a main memory (step S29). Then, the presence data manager 311 reads out data of the service profile, which is stored in the service profile data storage 313, and transmits it to the user terminal 5 of the requesting source (step S31). The publication controller 522 in the normal client application of the user terminal 5 receives the data of the service profile from the presence server 5, and temporarily stores the data into the storage device such as a main memory (step S33).

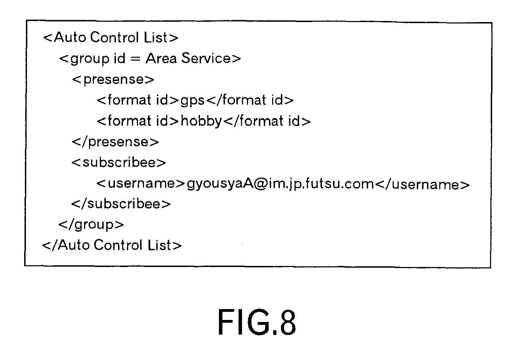

The service profile is data as shown in FIG 8, for example. In the example of FIG. 8, the service profile is described in the extensible Markup Language (XML), and includes a group tag having a group ID (here, "Area Service") of the presence group to be generated as an attribute value between Auto Control List tags. Presence tags to define the ID of the presence information whose delivery is requested and subscribee tags to define the user who receives the delivery are included between the group tags. One or plural format id tags are provided between the presence tags, and the ID of the presence information whose delivery is requested is defined between the format id tags. In addition, username tags to designate the ID of the user who carried out the delivery request are defined between the subscribee tags. The IDSP prepares such data, and registers it into the service profile storage 313 if required, and also registers at least its portion into the presence data storage 312.

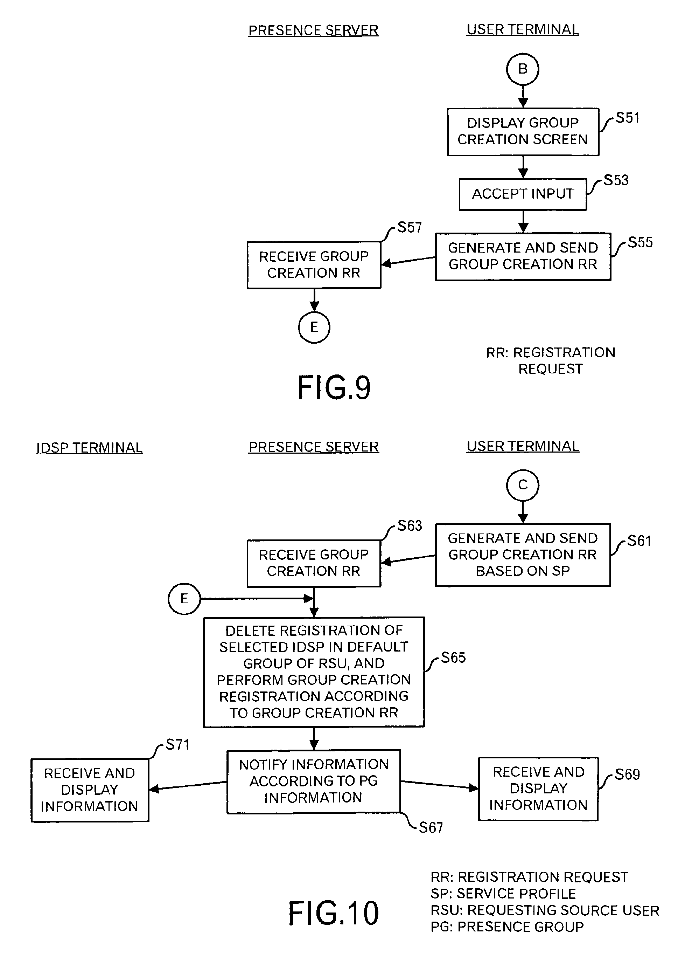

Incidentally, because there is a case where the service profile is not prepared according to the IDSP, if there is no service profile, the presence data manager 311 of the IDSP presence manager 31 in the presence server 3 transmits a message to the effect that there is no service profile to the user terminal 5. When the publication controller 522 in the normal user client application 52 of the user terminal 5 receives the message to the effect that there is no service profile from the presence server 3, the processing shifts to a processing in FIG. 9 via a terminal B.

On the other hand, when the publication controller 522 receives the service profile data, analyzes the service profile data and displays contents of the subscription request including data (for example, the group ID or group name) of the presence group to be registered in the presence data storage 352 of the user A, the ID or name (i.e. presence information item) of the presence information to be delivered, and the user ID or name of the IDSP of the requesting source to ask the user A to confirm them (step S35) . In this way, the user can recognize that the subscription is reversely requested from the IDSP of the subscription request destination and what presence information should be delivered. At this stage, the user A has to determine whether the delivery of his or her own presence information is allowed or rejected.

The user terminal 5 accepts a selection input from the user A (step S37), and judges its content. When the selection input having a meaning that the delivery of his or her own presence information was approved is carried out (step S39: Yes route), the processing shifts to a processing in FIG. 10 via a terminal C. On the other hand, when the selection input having a meaning that the delivery of his or her own presence information was rejected is carried out (step S39: No route), the publication controller 522 generates a delete request to request the deletion of the selected IDSP from the browsing list of the user A as the requesting source user, a delete request to request the deletion of the selected IDSP from the subscriber list of the user A as the requesting source user, a delete request to request the deletion of the selected IDSP from the presence group of the user A as the requesting source user, a delete request to request the deletion of the user A as the requesting source user from the browsing list of the selected IDSP, a delete request to request the deletion of the user A as the requesting source user from the subscriber list of the selected IDSP, and a delete request to request the user A as the requesting source user from the presence group of the selected IDSP in order to discard the subscription relation up to this stage, and transmits them to the presence server 3 (step S41). It is possible to unify these delete requests to a delete request the presence data manager 351 in the user presence manager 35 of the user A processes, and a delete request the presence data manager 311 in the IDSP presence manager 31 of the selected IDSP processes. In addition, it is possible to define a delete request combining all these requests, and decompose it into respective delete processings in the presence server 3 side. Incidentally, the presence manager 311 in the IDSP presence data manager 31 of the selected IDSP deletes data of the user A as the requesting source user by this delete request. However, no problem occurs if it is secured that the delete request is a request from the said person.

The presence data manager 351 of the user presence manager 35 of the user A in the presence server 3 receives a delete request to request the deletion of the selected IDSP from the browsing list of the user A as the requesting source user, a delete request to request the deletion of the selected IDSP from the subscriber list of the user A as the requesting source user, a delete request to request the deletion of the selected IDSP from the presence group of the user A as the requesting source user, a delete request to request the deletion of the user A as the requesting source user from the browsing list of the selected IDSP, a delete request to request the deletion of the user A as the requesting source user from the subscriber list of the selected IDSP, and a delete request to request the user A as the requesting source user from the presence group of the selected IDSP, and temporarily stores them into the storage device such as a main memory, respectively. It is possible to adopt a configuration that the delete requests are transferred to the IDSP presence manager 31 of the selected IDSP after the user presence manager of the user A temporarily receives all the delete requests.

Then, the presence data manager 351 of the user presence manager 35 deletes the selected IDSP from the subscriber list stored in the presence data storage 352, deletes the selected IDSP registered in the default group in the presence group information, and deletes the selected IDSP from the browsing list stored in the browsing list storage 353 according to these delete requests (step S43). In addition, the presence data manager 311 of the IDSP presence manager 31 deletes the user A as the requesting source user from the subscriber list stored in the presence data storage 312, deletes the user A registered in the default group in the presence group information, and deletes the user A from the browsing list stored in the browsing list storage 314 (step S45). Then, because the change that the user A as the requesting source user is deleted from the subscriber list was carried out, the presence data manager 311 of the IDSP presence manager 31 transmits a message to notify the IDSP terminal 7 of the change (step S47). This message is a delete notification of the user A as the requesting source user. The publication controller 711 of the IDSP client application 71 in the IDSP terminal 7 receives the delete notification from the presence server 3, and displays it on the display device (step S49).

Because, in the above description, the processing flow is adopted in which various registrations are carried out before the approval from the said person is obtained for the delivery of the presence information to another user, it is necessary to respectively delete registered data when the subscription relation is discarded. However, it is possible to adopt a processing flow in which the regular registration is carried out after the approval from the said person is obtained for all items, and in such a case, the regular registration is carried out after notifying to the related presence managers that the approval was obtained. When the approval cannot be obtained, the settings and provisional registrations are entirely discarded until this stage.

Incidentally, in this embodiment, it is preferable that the user such as the information distribution service provider or the shop delivers the presence information to the normal user as many as possible. Therefore, it is possible to adopt a setting that the approval from the normal user who is the said person is obtained for the delivery of the presence information.

Next, a processing after the shift through the terminal B of FIG. 7 will be explained by using FIG. 9. The processing of FIG. 9 is a processing in a case where the service profile of the selected IDSP is not defined, but the IDSP also requests the delivery of any presence information of the user A as the requesting source user. First, the publication controller 522 of the user terminal 5 displays a group creation screen on the display device (step S51). For example, the group creation screen having input columns of a presence group ID, an ID of the presence information for which the delivery is approved, and the delivery destination user ID is displayed. Here, the selected IDSP is already input in the delivery destination user ID. The user A designates the ID of presence information, for which it is considered that the delivery approval can be granted when the selected IDSP is handled as the delivery destination user ID, and the ID of the presence group to associate the selected IDSP with the ID of such presence information. The user terminal 5 accepts such inputs by the user A (step S53), generates a group creation registering request including the presence group ID, the ID of the presence information, and the delivery destination user ID, and transmits it to the presence server 3 (step S55). The presence data manager 351 of the user presence manager 35 in the presence server 3 receives the group creation registering request from the user terminal 5, and stores it into the storage device such as a main memory (step S57). The processing subsequent to this stage shifts to a processing of FIG. 10 via a terminal E. Simply explaining, the presence group is generated and registered in accordance with the group creation registering request, and the delivery of the presence information starts in accordance with this presence group. Incidentally, there is a case where the ID of the IDSP is additionally registered to the presence group which has already been created.

Next, a processing after the shift through the terminal C of FIG. 7 will be explained by using FIG. 10. The processing of FIG. 10 is a processing in a case where the delivery of the presence information based on the service profile of the selected IDSP is approved. First, the publication controller 522 of the normal user client application 52 in the user terminal 5 generates a group creation registering request to request that the presence group having the designated presence group ID to associate the selected IDSP with the ID of the presence information designated by the selected IDSP is generated, based on the received service profile of the selected IDSP, and transmits it to the presence server 3 (step S61). The presence data manager 351 of the user presence manager 35 in the presence server 3 receives the aforementioned group creation registering request from the user terminal 5, and temporarily stores it into the storage device such as a main memory (step S63) . Then, the presence data manager 351 deletes the registration of the selected IDSP in the default group included in the presence group information of the user A as the requesting source user, further registers the presence group of the designated presence group ID into the presence data storage 352 according to the aforementioned group creation registering request, and further registers the user ID of the selected IDSP in association with the ID of the designated presence information into the presence group (step S65). When this processing is completed, the delivery processor 315 included in the IDSP presence manager 31 and the delivery processing 354 included in the user presence manager 35 carry out the information delivery according to data stored in the presence data storage 312 and the presence data storage 352 similarly to the time of normally updating the presence information (step S67). The normal user client application 52 of the user terminal 5 receives the presence information of the IDSP delivered from the delivery processor 315, and displays it on the display device (step S69). In addition, the IDSP client application 71 of the IDSP terminal 7 of the IDSP terminal 7 receives the presence information of the user A from the delivery processor 354, and displays it on the display device (step S71). Incidentally, in the above description, the presence information is directly delivered to the users registered as the delivery destination from each delivery processor. However, it is possible to deliver the presence information through the delivery processor of the presence manager corresponding to the delivery destination user, for example. In addition, the IDSP terminal 7 stores the delivered presence information, for each user ID, into the user DB 74.

By using the aforementioned presence data, each user can define various presence group, and therefore, it becomes possible to flexibly change the delivery content of the presence information according to the characteristic of the delivery destination user or the like. In addition, comparing with the method by the conventional technique, the memory efficiency in the presence server 3 is drastically improved. Furthermore, as described above, by using the service profile, mainly the normal user can confirm the delivery content of the presence information, and because the group creation registering request to automatically carry out the delivery setting of the presence information without registering the creation of the presence group by himself or herself is further generated, the userability is enhanced. Therefore, the communication of the presence information is outspread, and much effective information is delivered to the users.

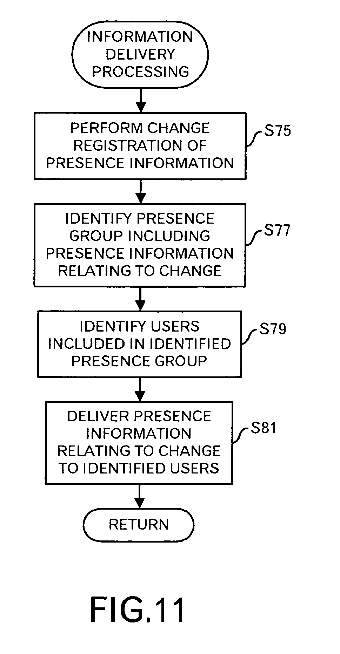

Next, an information delivery processing will be explained by using FIG. 11. Here, a processing in the IDSP presence manager 31 will be explained. When the presence data manager 311 receives the updated presence information from the presence information update processor 712 of the IDSP client application 71 in the IDSP terminal 7, the presence data manager 311 writes the presence information into the presence information storage area 3121 of the presence data storage 312 (step S75). Because the updated presence information is received with its ID, old presence information stored in the presence information storage area 3121 is updated with the received presence information by using the ID.

When the updated presence information is written into the presence information storage area 3121 of the presence data storage 312, the delivery processor 315 identifies the presence group in which the ID of the presence information is included, from the ID of the presence information relating to the change (step S77). By searching the presence group information storage area 3122 by the ID of the presence information, the presence group is identified. There is a case where plural presence groups are identified.

Next, the delivery processor 315 identifies the users included in the identified presence group (step S79). When the presence group is identified, the IDs of the users belonging to the group can be immediately identified. Therefore, it delivers the updated presence information to the identified users (step S81). Incidentally, because the delivery is carried out to the users who currently log in, the delivery processor 315 carries out the delivery processing with reference to a table (not shown) in which an IP address is registered in association with the ID of the user who currently logs in, for example.

The processing shown in FIG. 11 is carried out every update of the presence information. Therefore, the latest information is delivered in real time to the users who currently log in.

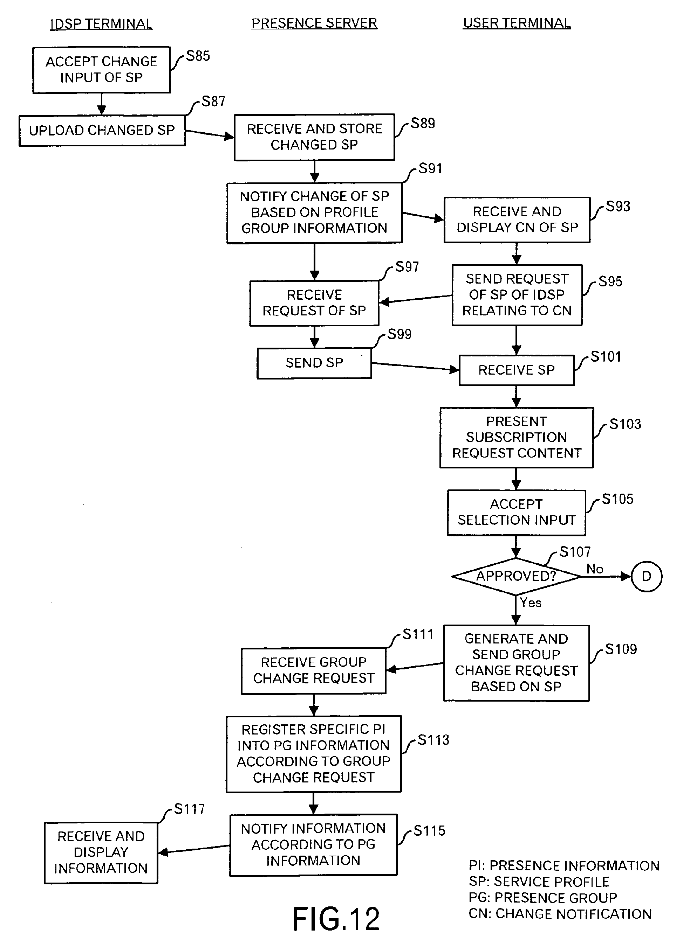

Next, a processing when the IDSP updates the service profile will be explained by using FIG. 12. When the service profile is updated, the item of the profile information whose delivery is requested to the user is changed. That is, because the profile information other than the profile information whose delivery has been approved is requested to be delivered, the approval has to be obtained again.

The presence information update processor 712 of the IDSP client application 71 in the IDSP terminal 7 accepts a change input of the service profile from the IDSP (step S85). Data of the new service profile may be created not by the presence information update processor 712 but by other tools or editors. Then, the presence information update processor 712 uploads the changed service profile to the presence server 3 (step S87). For example, a uniform resource locator (URL) of the upload destination of the updated service profile is designated to upload it.

The presence data manager 311 of the IDSP presence manager 31 in the presence server 3 receives the data of the updated service profile from the IDSP terminal 7, and stores it into the service profile storage 313 (step S89). In addition, the presence data manager 311 stores at least a portion of the updated service profile into the presence information storage area 3121 (FIG. 2) for the service profile, which is provided in the presence data storage 312. For example, the presence data manager 311 analyzes the service profile, and registers the item name or ID of the presence information, which will be delivered by this service profile, for example, to the area 325.

Then, as shown in FIG. 11, the delivery processor 315 identifies the presence group with which the presence ID of the service profile that is the presence information is associated, and notifies the change of the service profile to the users who are associated with the identified presence group. Here, the change of the service profile is informed as the change of the presence information. However, because the change of the service profile requires a processing different from the change of the normal presence information, it is possible to notify by using other methods. In addition, normally, the presence ID of the service profile is associated with all of the presence groups, and the change is notified to all the users. However, when requesting the delivery of the specific presence information to only some users, the presence ID of the service profile is associated only with the presence group to which such users belongs.

The normal user client application 52 of the user terminal 5 receives the change notification of the service profile as the changed presence information on the display device (step S93). Even when the change of the service profile is notified as the change of the presence information, the change notification of the service profile includes the presence ID of the service profile. Therefore, when detecting that the presence ID of the service profile is included in the delivered information, the publication controller 522 transmits a request of the service profile for the IDSP relating to the change notification, that is, the IDSP of the delivery source of the presence information to the presence server 3 (step S95).

The presence data manager 311 of the IDSP presence manager 31 in the profile server 3 receives the request of the service profile from the user terminal 5 (step S97). Then, the presence data manager 311 reads out the service profile after the change from the service profile storage 313, and transmits it to the user terminal 5 of the requesting source (step S99).

The publication controller 522 of the normal user client application in the user terminal 5 receives the data of the service profile from the presence server 3, and temporarily stores it into the storage device such as a main memory (step S101). The publication controller 522 analyzes the service profile data, displays the subscription request content including data (e.g. group ID or group name) of the presence group registered in the presence data storage 352, the ID or name (i.e. presence information item) of the presence information to be delivered, and the user ID or name of the IDSP of the requesting source on the display device, and requests the confirmation to the user. In this way, the user can recognize that the IDSP requests the delivery of what presence information. At this stage, the user has to determine whether he or she approves or rejects the delivery of his or her presence information.

The user terminal 5 accepts a selection input from the user (step S105), and judges its content. When the selection input having a meaning that the delivery of his or her own presence information was rejected is accepted (step S107: No route), a processing shifts to the processing of FIG. 6 through a terminal D. On the other hand, when the selection input having a meaning that the delivery of his or her own presence information was approved is accepted (step S107: Yes route), the publication controller 522 generates a group change request to request the association of the ID of the presence information changed by the IDSP with the same presence group as the presence group registered at the time of the new subscription, based on the received service profile, and transmits it to the presence server 3 (step S109). Incidentally, as described in the step S61, it is possible to transmit a group creation request to request the creation of the presence group having the designated presence group ID to associate the IDSP relating to the service profile with the designated presence information after the change. In this case, in a case where the presence group having the same presence group ID as the presence group ID included in the group creation request has already been registered in the presence data storage 352, the presence data manager 351 registers data of the presence group which has already been registered according to the received group creation request.

The presence data manager 351 of the user presence manager 35 in the presence server 3 receives the aforementioned group change request from the user terminal 5, and temporarily stores it into the storage device such as a main memory (step S111). Then, in response to the group change request, the presence data manager 351 registers the ID of the presence information included in the group change request into the presence group, which is already registered in the presence data storage 352 and is associated with the IDSP relating to the changed service profile (step S113). By this processing, the presence group associating the ID of the presence information after the change with the user ID of the IDSP is registered in the presence data storage 352.

When this processing is completed, the delivery processor 354 included in the user presence manager 35 carries out the delivery of the presence information according to the new presence group information stored in the presence data storage 352 similarly to the update time of the normal presence information (step S115). The IDSP client application 71 of the IDSP terminal 7 receives the presence information of the user, which includes data for the new presence information item, from the delivery processor 354, and displays it on the display device (step S117). The IDSP terminal 7 stores the delivered presence information, for each user ID, for example, in the user DB 74.

In this way, even when the service profile is changed, the confirmation of the presence information item which will be delivered after the change is automatically requested to each subscriber to obtain his or her approval. Therefore, even if there is a change of the service profile, the subscription relation is not discarded immediately, and when the subscriber approves, the subscription relation continues. In addition, there is no need to change the presence group information by the subscriber himself or herself according to the change of the service profile, and the time necessary to use this presence information delivery service is reduced.

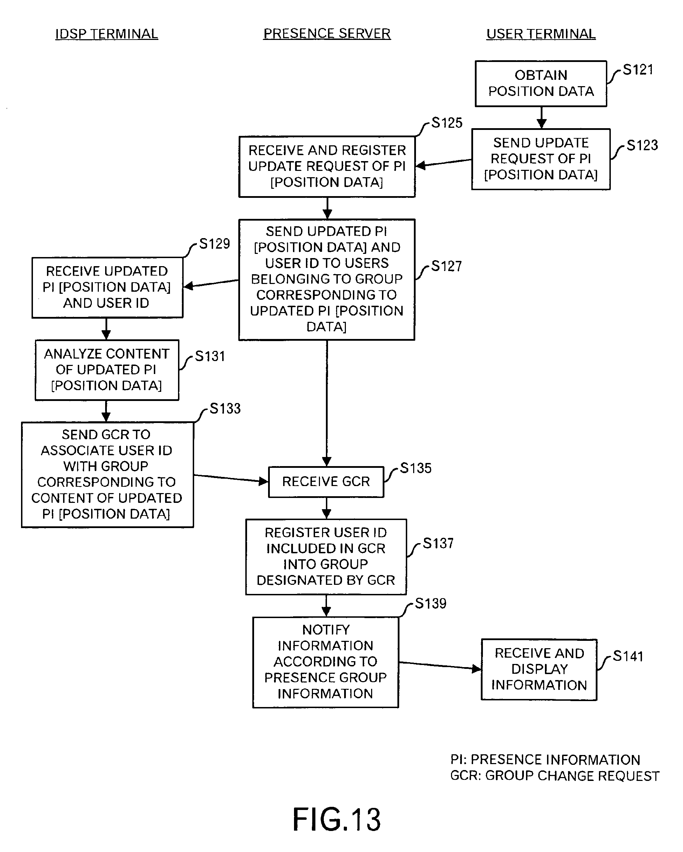

Next, one example to realize the efficient delivery of the presence information will be explained by using FIG. 13. Here, the user A holding the terminal A is being moved. During the movement, the position data acquiring unit 51 of the user terminal 5 acquires position data of the current position (step S121). For example, data of the latitude and longitude is acquired. Then, the outside data judgment processor 523 of the normal user client application 51 obtains the position data from the position data acquiring unit 51, and analyzes the position data. For example, it is judged whether or not the position data obtained this time should be transmitted as the change of the presence information to the presence server 3. For example, by holding the position data when notifying it as the presence information to the presence server 3 at the previous time, it is judged whether or not he or she moves by a predetermined distance. However, the processing of the outside data judgment processor 523 in the user terminal 5 is arbitrary, and it is possible to transmit the latest position data to the presence server 3 every time when the movement is detected without carrying out such judgment.

When the position data obtained this time is delivered to the presence server 3, the presence information update processor 521 transmits an update request of the presence information including the position data obtained this time, to the presence server 3 (step S123). The presence data manager 351 of the user presence manager 35 in the presence server 3 receives the update request of the presence information including the position data obtained this time from the user terminal 5, and registers the presence information into the presence information storage area 3121 of the presence data storage 352 (step S125). Then, the delivery processor 354 identifies the presence group with which the ID of the updated presence information is associated, further identifies the users belonging to the identified presence group, and transmits the updated presence information (i.e. position data) and the delivery source user ID to the identified users (step S127). Here, the IDSP is identified as the delivery destination user.

Then, the IDSP client application 61 in the IDSP terminal 7 receives the position data as the updated presence information and the delivery source user ID from the presence server 3 (step S129). For example, the received position data may be a registration request to the user DB 74. In addition, the outside data judgment processor 713 analyzes the received position data by using the data stored in the area DB 73 (step S131). Here, the area DB 73 stores the area definition based on the position data such as address or latitude and longitude, and the user judges in which area the user is positioned now. For example, by using the presence group ID as the area code, the presence group ID to which the user should belong is identified from the current position data of the user. For example, when the area code of the 5th avenue in Manhattan of New York is identified from the position data, the presence group whose presence group ID is the area code of the 5th avenue in Manhattan of New York is identified.

Therefore, the publication controller 711 generates the group change request including the user ID and the presence group ID after the change in order to associate the ID of the delivery source user of the updated presence information with the presence group corresponding to the content of the updated presence information, and transmits it to the presence server 3 (step S133). The presence data manager 311 of the IDSP presence manager 31 in the presence server 3 receives the aforementioned group change request, and temporarily stores it into the storage device such as a main memory (step S135). The presence data manager 311 searches the presence group information storage area 3122 of the presence data storage 312 by using the user ID included in the group change request to delete the user ID from the presence group to which the user currently belongs, and registers the user ID to the presence group designated by the group change request (step S137). That is, the presence group information is updated in the presence group information storage area 3122.

Then, the delivery processor 315 delivers the presence information according to the presence group information stored in the presence group information storage area 3122 of the presence data storage 312 similarly to the update time of the normal presence information (step S139). The delivery processor 315 delivers the presence information that belongs to the presence group relating to the presence group ID included in the group change request to the user of the user ID included in the group change request. The normal user client application 52 of the user terminal 5 receives the presence information from the presence server 3, and displays it on the display device (step S141).

By carrying out this processing, when the user moves, for example, from the third avenue in Manhattan of New York to the 5th avenue, information of shops, which exist in the 5th avenue, and the like are newly delivered. Along with the user's movement, the presence group with which the user ID of the user is associated changes one after another. That is, along with the user's movement, the content of the delivered presence information changes. In this way, because the useful information is automatically delivered according to the user's position without carrying out any setting by the user, the convenience of the user is enhanced. Such enhancement of the convenience is realized much easily by adopting the aforementioned data structure of the presence data.

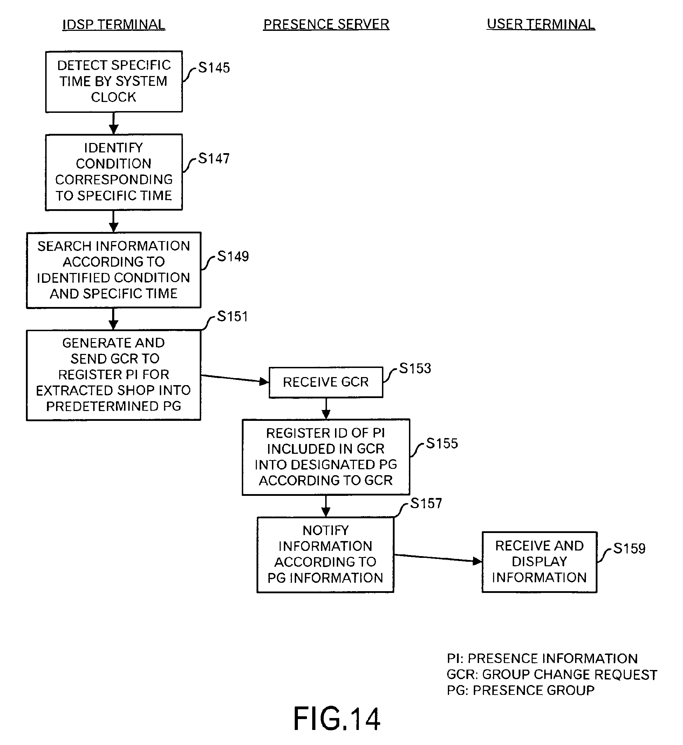

Next, another example to realize the effective delivery of the presence information will be explained by using FIG. 14. First, the outside data judgment processor 713 of the IDSP terminal 7 detects a specific time from the system clock of the IDSP terminal 7 (step S145). The outside data judgment processor 713 identifies a condition corresponding to the specific time (step S147). For example, it identifies a condition (e.g. opening time, time for a limited-time sale, time for lunch service) associated with the specific time from a table (not shown) set to the outside data judgment processor 713 in advance. This condition may be fixed.

In addition, there is a case where other conditions, which is not the specific time, is associated. Then, the outside data judgment processor 713 searches the shop DB 72 according to the identified condition and the specific time (step S149). For each shop, the presence group (e.g. area code) to which it should belong, and data such as 10 o'clock as the opening time, 18 o'clock as the time for a limited-time sale, or 11 o'clock as the lunch service time is registered to the shop DB 72. When the specific time is 10 o'clock and the condition identified in the step S147 is the opening time, the shop whose opening time is 10 o'clock is extracted.

The publication controller 711 generates a group change request to register the presence information (which has been registered into the presence information storage area 3121) for the extracted shop into the designated presence group, and transmits it to the presence server 3 (step S151). The group change request includes the ID of the presence information and the ID of the designated presence group. The presence data manager 311 of the IDSP presence manager 31 in the presence server 3 receives the aforementioned group change request from the IDSP terminal 7, and temporarily stores it into the storage device such a main memory (step S153). The presence data manager 311 registers the ID of the presence information included in the group change request into the presence group of the presence group ID included in the same group change request (step S155). That is, the ID of the presence information included in the group change request is stored in the storage area of the designated presence group of the presence group information storage area 3122. By carrying out this processing, the presence information of the shops extracted in the step S149 is associated with the designated presence group.

Then, the delivery processor 315 delivers the presence information according to the presence group information stored in the presence group information storage area 3122 of the presence data storage 312 similarly to the update time of the normal presence information (step S157). The presence information, which belongs to the presence group relating to the presence group ID included in the group change request, is delivered to all the users associated with the presence group. The normal user client application 52 of the user terminal 5 receives the presence information from the presence server 3, and displays it on the display device (step S151).

By carrying out such a processing, when the presence information of the shop extracted in the step S149 is "It is 10 o'clock, and this shop opened. XYZ is sold for 100 Yen on a large scale", it is delivered to the users in the area near the shop, for example, at 10 o'clock. That is, it becomes possible to deliver appropriate presence information to the users according to time. Because it is possible to control the deliver of the presence information according to the situation of the IDSP or the shop, which is a customer of the IDSP, the flexible information delivery can be carried out. Incidentally, this flexible information delivery can be easily realized by adopting the data structure of the aforementioned presence data.

Incidentally, if plural presence information items are registered for one shop, it becomes possible to delivery the different presence information according to the time for the one shop. In addition, although the presence group to which the presence information that has been already registered belongs is controlled in the aforementioned example, it is possible to deliver the different presence information according to the time by changing the content of the presence information simultaneously or immediately before.

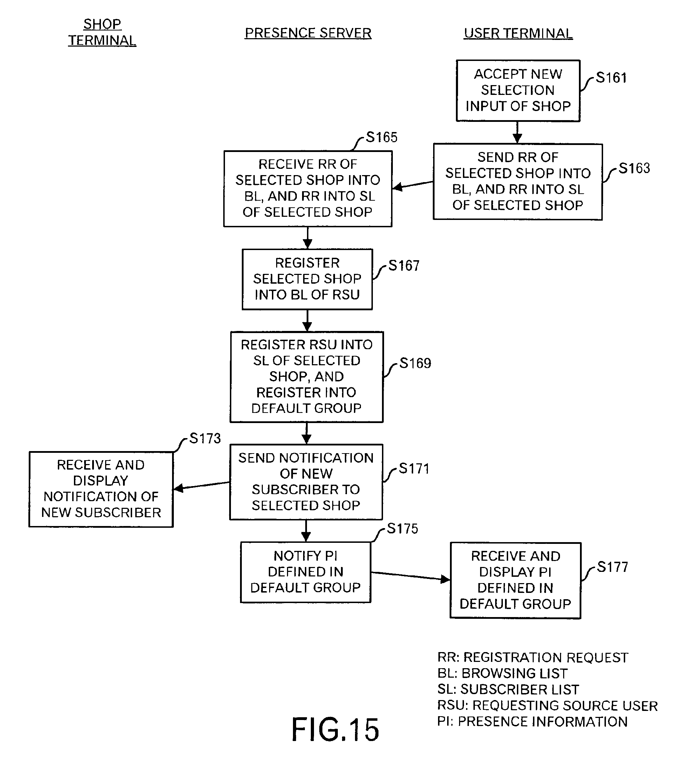

Next, an example of a processing when the delivery is directly applied not to the IDSP, but to the shop will be explained by using FIG. 15. First, the normal user client application 52 of the user terminal 5 accepts a selection input relating to a new subscription application to the shop from the user A (step S161). Next, the publication controller 522 of the normal user client application 52 generates a registration request to request the registration of the selected shop as the new subscription destination into the browsing list of the user A, and a registration request to request that the user A is registered into the subscriber list of the selected shop, and transmits them to the presence server 3 (step S163).

In response to this, the presence data manager 351 of the user presence manager 35 corresponding to the user A and included in the presence server 3 receives a registration request to request the registration of the shop selected as the new subscription destination into the browsing list of the user A, and the presence data manager 331 of the shop presence manager 33 corresponding to the selected shop receive a registration request to request the registration of the user A into the subscriber list of the selected shop, and they temporarily store the registration requests into the storage device such as a main memory, respectively (step S165).

Then, the presence data manager 351 of the user presence manager 35 registers the selected shop into the browsing list of the requesting source user, which is stored in the browsing list storage 353, according to the aforementioned registration request (step S167). In addition, the presence data manager 331 of the shop presence manager 33 registers the user A (i.e. user ID of the user A) as the requesting source user into the subscriber list stored in the presence data storage 332 according to the aforementioned registration request, and further registers the user A into the presence group "default" (step S169). Then, because the new registration into the subscriber list was carried out, the presence data manager 331 transmits a message to notify the appearance of the new subscriber (i.e. user A) to the shop terminal 9 of the selected IDSP (step S171). This notification corresponds to a subscription request from the user A to the selected shop.

The publication controller 911 of the shop client application 91 in the shop terminal 9 receives the notification for the new subscriber (i.e. user A) from the presence server 3, and displays it on the display device (step S173). Incidentally, although there is no need to forcibly display it on the display device, it is displayed on the display device when there is a case where a manager of the shop confirms it. When this processing is completed, the deliver processor 334 included in the shop presence manager 33 delivers the presence information associated with the presence group "default" stored in the presence data storage 332, similarly to the update time of the normal presence information. In this embodiment, the presence information is also associated with the default presence group, and only by carrying out the registration when the user would like to subscribe, the minimum presence information is delivered. The normal client application 52 of the user terminal 5 receives the presence information of the shop, which is delivered from the delivery processor 334, and displays the presence information on the display device (step S177).

By carrying out such a processing, it becomes possible for the shop to directly deliver the presence information. Incidentally, differently from the IDSP, the presence information is delivered in one direction without requesting the delivery of the presence information to the subscriber. Even if it is the shop, it is possible to request the delivery of the presence information to the subscriber, similarly to the IDSP.

In addition, it is possible for the shop to define not only the default presence group, but also other presence groups. As indicated in FIG. 3, it is possible to define the presence group of "good customers". Furthermore, it is possible to define plural levels of "good customers".

In a case of the shop, for example, the sales/point data acquiring unit 92 obtains monthly sales of the customer or a point value corresponding to sales of the customer, for example, from the sales/point management system 11. Then, the outside data judgment processor 913 analyzes the sales of the customer or the point value corresponding to the sales of the customer, which is obtained by the sales/point data acquiring unit 92, and extracts the user to be registered into the presence group of "good customer". Naturally, the user ID in this presence information delivery system must be registered in the sales/point management system 11. When the user is extracted, a group change request is generated in order to register the extracted user ID into the presence group of "good customer", and is transmitted to the presence server 3. A processing subsequent to the generation processing of this group change request is basically the same as the steps subsequent to the step S133 in FIG. 13. In this way, by changing the presence group to which the subscriber belongs even if it is a shop, more flexible information delivery becomes possible. In addition, functions available to the IDSP can be realized for the shops, similarly. Therefore, it is possible to register the presence information delivered from the subscriber into the user DB 93, and use it for the business activities.

Although one embodiment of this invention was explained above, this invention is not limited to this embodiment. The functional blocks shown in FIG. 1 are mere examples, and program modules are not always made according to the functional blocks. In addition, the aforementioned processing flows are mere examples, and it is possible to adopt other processing flows, which causes the same results. Furthermore, if the same results can be obtained, the order of the processing steps can be replaced, and they can be simultaneously executed.

In addition, in the aforementioned example, when the presence information associated with a specific presence group is associated with another presence group, the presence information is delivered to users who are registered into the presence group after the movement. In addition, as for the users who were registered to the specific presence group before the movement, it is possible that the change is determined, and a message to the effect that the delivery is not carried out or the like is delivered.

In addition, the IDSP terminal 7 and the shop terminal 7 may be computers such as servers, not the terminals.

## Claims

1. A presence information processing method executed by a terminal apparatus cooperating with a presence information management server managing, for each user, data concerning one or a plurality of presence groups to associate one or a plurality of presence information items for presence information to be delivered with one or a plurality of IDs of delivery destination users of said presence information relating to said presence information item, said presence information processing method comprising:
a first data receiving step of receiving, from said presence information management server, first data including a presence information item regarding specific presence information, which is registered in said presence information management server in advance and will be delivered to a specific user, when said specific user requested to deliver presence information;
a step of carrying out a display on a display device to prompt an input regarding whether or not said delivery of said specific presence information to said specific user is approved, based on said first data received in the first data receiving step; and
a step of, in response to an approval input for said delivery of said specific presence information, generating a creation request of a presence group to associate said specific user with said presence information item regarding said specific presence information, based on said received first data, and transmitting said creation request to said presence information management server.

2. The presence information processing method as set forth in claim 1, further comprising:
a step of transmitting a delivery request for presence information of said specific user to said delivery information management server; and
a second data receiving step of receiving second data representing that said specific user requested to deliver said presence information, from said presence information management server, and
**characterized in that** said first data receiving step is carried out after said second data receiving step.

3. The presence information processing method as set forth in claim 1, further comprising:
a step of transmitting a request to cancel a subscription relation with said specific user to said presence information management server, in response to a refusal input for said delivery of said specific presence information to said specific user.

4. The presence information processing method as set forth in claim 1, **characterized in that** said first data includes information concerning said presence group to associate said specific user with said presence information item regarding said specific presence information.

5. The presence information processing method as set forth in claim 1, further comprising:
a step of receiving the changed second data from said presence information management server, when said first data is changed by said specific user;
a step of carrying out a display to prompt an input regarding whether or not said delivery of said designated presence information to said specific user is approved, based on the received and changed second data; and
a step of generating a change request of a presence group to associate said specific user with a presence information item regarding said designated presence information, based on said changed second data, in response to an approval input for said delivery of said designated presence information, and transmitting the generated change request to said presence information management server.

6. The presence information processing method as set forth in claim 5, wherein at least one portion of said first data is said presence information of said specific user, and said presence information corresponding to said at least one portion of said first data is associated with at least one portion of said presence groups of said specific user, and
said presence information processing method further comprises:
receiving at least one portion of said second data as said presence information from said presence information management server.

7. A presence information processing method executed by a computer cooperating with a presence information management server managing, for each user, data concerning one or a plurality of presence groups to associate one or a plurality of presence information items for presence information to be delivered with one or a plurality of IDs of delivery destination users of said presence information relating to said presence information item, said presence information processing method comprising:
a step of obtaining predetermined data, and storing said predetermined data into a storage device;
an evaluation step of evaluating said predetermined data stored in said storage device, based on data, which is associated with change of an association in a presence group between a presence information item and a delivery destination user and is stored in a group change data storage; and
when it is judged by said evaluation step that said predetermined data stored in said storage device satisfies a predetermined condition, a step of generating a request for at least either change of a presence group to which said presence information item belongs or change of a presence group to which said delivery destination user belongs, and transmitting the generated request to said presence information management server.

8. The presence information processing method as set forth in claim 7, **characterized in that** when said predetermined data is data associated with said delivery destination user, at least said request for said change of said presence group to which said delivery destination user belongs is generated.

9. The presence information processing method as set forth in claim 7, **characterized in that** when said predetermined data is data that is associated with said presence information item in advance and is stored in said group change data storage, at least said request for said change of said presence group to which said presence information item belongs is generated.

10. The presence information processing method as set forth in claim 7, further comprising:
a step of, upon receiving notification that another user is newly associated with said presence group, requesting said another user to deliver data relating to said predetermined presence information item.

11. A presence information processing method executed by a presence information management server storing, for each user, data concerning one or a plurality of presence group to associate one or a plurality of presence information items for presence information to be delivered with IDs of one or a plurality of delivery destination users of said presence information relating to said presence information item into a presence data storage, said presence information processing method, comprising:
when a new delivery request of presence information of a second user is received from a terminal of a first user, a step of reading out service profile data, which includes a presence information item regarding specific presence information delivered to said first user and is registered in association with said first user, from a service profile data storage, and transmitting the read service profile data to a terminal of said second user; and
when a generation request of a presence group of said second user to associate said first user as a delivery destination user with said specific presence information item is received from a terminal of said second user, a step of generating said presence group according to said generation request, and registering the generated presence group into said presence data storage.

12. The presence information processing method as set forth in claim 11, further comprising:
when service profile data after change is received from said terminal of said first user, a step of registering said service profile data after said change in said service profile data storage;
a step of reading out said service profile data after said change, which is registered in association with said first user, from said service profile data storage device, and transmitting the read service profile data after said change to a terminal of a third user associated with at least one of said presence groups of said first user; and
when a change request of said presence group of said third user to associate said first user as a delivery destination user with said specific presence information item after said change is received from said terminal of said third user, a step of changing content of said presence group according to said change request, and registering the changed content of said presence group into said presence data storage.

13. A presence information processing program executed by a terminal apparatus cooperating a presence information management server managing, for each user, data concerning one or a plurality of presence groups to associate one or a plurality of presence information items for presence information to be delivered with one or a plurality of IDs of delivery destination users of said presence information relating to said presence information item, said presence information processing program comprising:
a first data receiving step of receiving, from said presence information management server, first data including a presence information item regarding specific presence information, which is registered in said presence information management server in advance and will be delivered to a specific user, when said specific user requested to deliver presence information;
a step of carrying out a display on a display device to prompt an input regarding whether or not said delivery of said specific presence information to said specific user is approved, based on said first data received in said first data receiving step; and
a step of, in response to an approval input for said delivery of said specific presence information, generating a creation request of a presence group to associate said specific user with said presence information item regarding said specific presence information, based on said received first data, and transmitting said creation request to said presence information management server.

14. A presence information processing program executed by a computer cooperating a presence information management server managing, for each user, data concerning one or a plurality of presence groups to associate one or a plurality of presence information items for presence information to be delivered with one or a plurality of IDs of delivery destination users of said presence information relating to said presence information item, said presence information processing program comprising:
a step of obtaining predetermined data, and storing said predetermined data into a storage device;
an evaluation step of evaluating said predetermined data stored in said storage device based on data, which is associated with change of an association in a presence group between a presence information item and a delivery destination user and is stored in a group change data storage; and
when it is judged in said evaluation step that said predetermined data satisfies a predetermined condition, a step of generating a request for at least either change of a presence group to which said presence information item belongs or change of a presence group to which said delivery destination user belongs, and transmitting the generated request to said presence information management server.

15. A presence information processing program executed by a presence information management server storing, for each user, data concerning one or a plurality of presence group to associate one or a plurality of presence information items for presence information to be delivered with IDs of one or a plurality of delivery destination users of said presence information relating to said presence information item into a presence data storage, said presence information processing program comprising:
when a new delivery request of presence information of a second user is received from a terminal of a first user, a step of reading out service profile data, which includes a presence information item regarding specific presence information delivered to said first user and is registered in association with said first user, from a service profile data storage, and transmitting the read service profile data to a terminal of said second user; and
when a generation request of a presence group of said second user to associate said first user as a delivery destination user with the specific presence information item is received from a terminal of said second user, a step of generating said presence group according to said generation request, and registering the generated presence group.

16. A storage medium storing a presence information processing program as set forth in any one of claims 13 to 15.

17. A computer for cooperating with a presence information management server managing, for each user, data concerning one or a plurality of presence groups to associate one or a plurality of presence information items for presence information to be delivered with one or a plurality of IDs of delivery destination users of said presence information relating to said presence information item, said computer comprising:
first data receiving means for receiving, from said presence information management server, first data including a presence information item regarding specific presence information, which is registered in said presence information management server in advance and will be delivered to a specific user, when said specific user requested to deliver presence information;
means for carrying out a display on a display device to prompt an input regarding whether or not said delivery of said specific presence information to said specific user is approved, based on said first data received by said first data receiving means; and
means for generating, in response to an approval input for said delivery of said specific presence information, a creation request of a presence group to associate said specific user with said presence information item regarding said specific presence information, based on said first data, and transmitting said creation request to said presence information management server.

18. A computer for cooperating with a presence information management server managing, for each user, data concerning one or a plurality of presence groups to associate one or a plurality of presence information items for presence information to be delivered with one or a plurality of IDs of delivery destination users of said presence information relating to said presence information item, said computer comprising:
means for obtaining predetermined data, and storing said predetermined data into a storage device;
evaluation means for evaluating said predetermined data stored in said storage device based on data, which is associated with change of an association in a presence group between a presence information item and a delivery destination user and is stored in a group change data storage; and
means for generating, if it is judged in said evaluation step that said predetermined data satisfies a predetermined condition, a request for at least either change of a presence group to which said presence information item belongs or change of a presence group to which said delivery destination user belongs, and transmitting the generated request to said presence information management server.

19. A presence information management server, comprising:
a presence data storage that stores, for each user, data concerning one or a plurality of presence group to associate one or a plurality of presence information items for presence information to be delivered with IDs of one or a plurality of delivery destination users of said presence information relating to said presence information item, to execute a presence information processing;
means for reading out, if a new delivery request of presence information of a second user is received from a terminal of a first user, service profile data, which includes a presence information item regarding specific presence information delivered to said first user and is registered in association with said first user, from a service profile data storage, and transmitting the read service profile data to a terminal of said second user; and
means for generating, if a generation request of a presence group of said second user to associate said first user as a delivery destination user with the specific presence information item is received from a terminal of said second user, said presence group according to said generation request, and registering the generated presence group into said presence data storage.
